(19) Europäisches Patentamt
European Patent Office
Office européen des brevets

(11) Publication number: **0 257 131 B1**

(12) **EUROPEAN PATENT SPECIFICATION**

(45) Date of publication of patent specification: **29.05.91**

(51) Int. Cl.⁵: **C08F 10/08**, C08F 2/34, C08F 4/649

(21) Application number: **86114018.4**

(22) Date of filing: **09.10.86**

The file contains technical information submitted after the application was filed and not included in this specification

(54) **Method for producing butene-1 polymer.**

(30) Priority: **21.08.86 JP 196266/86**

(43) Date of publication of application:
**02.03.88 Bulletin 88/09**

(45) Publication of the grant of the patent:
**29.05.91 Bulletin 91/22**

(84) Designated Contracting States:
**AT BE CH DE FR GB IT LI LU NL SE**

(56) References cited:
**EP-A- 0 135 358**
**US-A- 4 256 866**

(73) Proprietor: **IDEMITSU PETROCHEMICAL CO. LTD.**
**1-1, Marunouchi 3-chome Chiyoda-ku**
**Tokyo 100(JP)**

Proprietor: **NESTE OY**
**Keilaniemi**
**SF-02150 Espoo 15(FI)**

(72) Inventor: **Yamawaki, Takashi**
**20-11, 4-chome Sakuradai**
**Ichihara-City Chiba Prefecture(JP)**
Inventor: **Imabayashi, Hideki**
**892-banhi, Anegasaki**
**Ichihara-City Chiba Prefecture(JP)**

(74) Representative: **TER MEER - MÜLLER - STEINMEISTER & PARTNER**
**Mauerkircherstrasse 45**
**W-8000 München 80(DE)**

**EP 0 257 131 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

### FIELD OF THE INVENTION

This invention relates to a process for producing a butene-1 polymer, and more particularly to a process for producing a butene-1 polymer which is suitable for molding e.g., a pipe, in the presence of a high activity catalyst, taking advantage of a vapor phase polymerization.

### BACKGROUND OF THE INVENTION

Heretofore, there have been proposals on a process for producing a polybutene-1 polymer having a high crystal property. However, most of them use a titanium trichloride as a catalyst to conduct a solution polymerization and a slurry polymerization. On the other hand, it is foreseen that if a butene-1 polymer could be produced by means of a vapor phase polymerization, the process would be simplified and production costs would be reduced. Because of this reason, there have been proposals which suggest possiblities of a vapor phase polymerization of a butene-1. However, there remained various problems yet to be solved in order to put into practice the process according to this kind of proposals in an industrial scale.

For example, a butene-1 polymer, when compared with polyethylene and polypropylene, has a strong affinity for a hydrocarbon solvent. Accordingly, if a small amount of solvent should be accompanied when a catalyst component is supplied to a vapor phase polymerization sytem, polymers would be more easy to coagulate each other. As a result, it becomes difficult to effect a stable operation for a long period or to actuate the apparatus.

When a vapor phase polymerization is caried out using a catalyst of a titanium trichloride catalyst (see JP-A-192716/85) conventionally often used, a catalyst of a magnesium chloride catalyst (see JA-A-6205/84) and the like, the catalytic activity becomes weak, a stereoregularity of the butene-1 polymer obtained is insufficient and the advantage resulting from the use of the vapor phase polymerization method is not sufficiently enjoyed.

### SUMMARY OF THE INVENTION

It is an object of the present invention to provide a process for producing a butene-1 polymer by the use of a high activity catalyst.

Another object of the present invention is to provide a process for producing a butene-1 polymer having a high stereoregularity by the use of a vapor phase polymerization method.

A further object of the present invention is to provide a process for producing a butene-1 polymer having a small content of a catalyst residue.

A still further object of the present invention is to provide a process for producing a butene-1 polymer under a stable operation condition which is suitably used for molding a molded product such as a pipe.

In order to achieve the above objects there is essentially provided a process for producing a butene-1 polymer characterized in that, in a process for producing a homopolymer of butene-1 or a copolymer of butene-1 and an $\alpha$ olefin other than the butene-1 in the presence a catalyst obtained from a solid catalyst component (A), an organic aluminium compound (B) and an electron donating compound (C) and under the condition of vapor phase polymerization, the solid catalyst component (A) is a non-layer solid catalyst component obtained by producing a carrier by chlorinating at least one kind of organic magnesium compounds represented by formula

$MgR'R''$ (1)

wherein R′ and R″, which may be the same or different, each represent an alkyl group having 1 to 20 carbon atoms, with at least one kind of chlorinating agent, the carrier produced is contacted in the presence of an electron donor with a titanic halide at a temperature of -25 to + 180 °C, and the electron donating compound (C) is a heterocyclic compound represented by

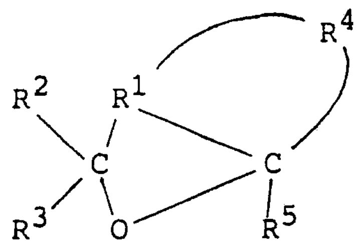

(2)

wherein $R^1$ and $R^4$ each represent a hydrocarbon group, and $R^2$, $R^3$ and $R^5$ each represent a hydrogen atom or a hydrocarbon group, and reaction temperature as the vapor phase polymerization condition is from 45 to 70 °C.

According to this process, as shown in Fig. 1, a homopolymer of butene-1 or a copolymer of butene-1 and an α olefin other than the butene-1 is produced in the presence of a catalyst obtained from a particular solid catalyst component (A), an organic aluminium compound (B) and a particular electron donating compound (C) and under the condition of vapor phase polymerization.

## BRIEF DESCRIPTION OF THE DRAWINGS

Fig. 1 is an illustration for explaining a preparation of a catalyst;
Fig. 2 is an X-ray spectral analysis chart of a carrier composed of a chlorine compound; and
Fig. 3 is an X-ray spectral analysis chart of a catalyst component.

## DETAILED DESCRIPTION OF INVENTION

### 1. SOLID CATALYST COMPONENT (A)

The above described solid catalyst component (A) is prepared from a non-layer solid catalyst component obtained by producing a carrier by chlorinating at least one kind of organic magnesium compounds represented by formula

MgR′R″

wherein R′ and R″, which may be the same or different, each represent an alkyl group having 1 to 20 carbon atoms, with at least one kind of chlorinating agents, and the carrier produced is contacted in the presence of an electron donor with a titanic halide at a temperature of -25 to + 180 °C. If a solid catalyst component other than the afore-mentioned one, such as for example a solid catalyst component prepared by using a magnesium chloride as a starting material, is used, there are some problems that the catalytic activity becomes lower, the polymer obtained promotes corrosion of a molding machine since much chlorine remains in the polymer obtained, and so on.

The non-layer catalyst component of the present invention can be obtained by reacting an organic magnesium compound, a chlorinating agent, a titanium halide and an electron donor or a Lewis base.

An alkyl magnesium compound to be used is represented by formula

MgR′R″

wherein R′ and R″ each represent the same group as mentioned.

The carbon atoms of the alkyl group are generally 1 to 20, and preferably 2 to 12.

Suitable examples of the alkyl magnesium compound include diethyl magnesium, ethylbutyl magnesium, ethylhexyl magnesium, ethyloctyl magnesium, dibutyl magnesium, butylhexyl magnesium, butyloctyl magnesium and dicyclohexyl magnesium. Of these, the butyloctyl magnesium is preferred.

The chlorinating agents include chlorine or alkyl chloride, e.g., butyl chloride or pentyl chloride, with the butyl chloride being particularly preferred.

The chlorinating can be carried out at a temperature of 0 to 100 °C, preferably 20 to 60 °C and

particularly preferably 20 to 40°C. The electron donor may present in the reacting mixture when chlorinating.

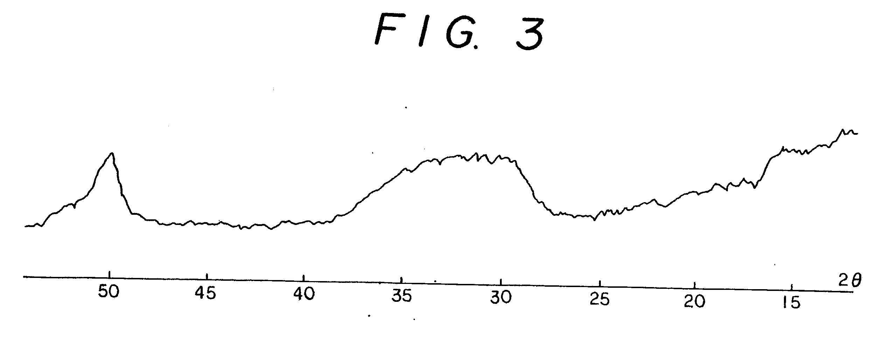

Fig. 2 illustrates an X-ray diffraction spectrum of a solid chlorinating product or carrier. Also, Fig. 3 illustates a typical X-ray diffraction spectrum of catalyst component serving this carrier as its base (a Seifert MZIII-X-ray diffractmeter is used for the X-ray diffraction method. condition: CuK $\alpha$-ray, 40 KV, 30mA). When the spectrums shown in Fig. 2 and Fig. 3 are compared, it is clearly understood that both of them are extremely similar. In the spectrum pattern, one comparatively sharp peak can be seen in the position of $2\theta = 50°$ and a wide halo can be seen in the central area of the pattern.

From a scientific view point, a crystal phase of a magnesium chloride cannot be identified from the spectrum (Fig.2) of the carrier and the final catalyst component (Fig. 3) in the X-ray diffraction method. In these spectrum patterns of X-ray diffraction, no crystal peak appears at $2\theta = 15°$ which is fundamental and peculiar to the magnesium chloride. The peak at $2\theta = 15°$ having a Miller indices (003) in crystallography is apparently related to a repetition of Cl-Mg-Cl layers overlapped in the c axis direction of a crystal of a magnesium chloride structure. As a matter of fact, as reported in literature, it is sure that no phase of the magnesium chloride is present (see JCPDS card No. 25-1156, J.W.C. Chien, et al, Journal of Polymer Science, Vol. 21, pp 737 (1983), U. Giannini, Macromol. Chem., Vol. 5, pp 216 (1981)). An X-ray diffraction chart of a carrier which have been chemically activated after chlorination shows almost none of a crystal structure. The wide peak at $2\theta = 50°$ (110) is the only peak which also can be found in the magnesium chloride. However, it is well known that characterization of the crystal phase is impossible to obtain from one analysis peak and at least three peaks are necessary for that purpose.

Through analysis, it is made clear that the carrier or the solid catalyst component (A) is not stoichiometric with respect to Mg and Cl. The mole ratio of Mg : Cl is sometime so low as about 1 : 0.5. About one half of the carrier is an Mg compound and the rest of it is an organic compound such hydrocarbon and chlorinated hydrocarbon. The presence of these organic compounds exerts an influence on the crystal structure of a produced article. Because of the presence of these organic compounds, a formation of a normal crystal lattice is disturbed, and a certain kind of novel non-layer product having a miniture crystal size is formed.

This product has much more active site than the original activated magnesium chloride. By this, the high activity of a catalyst system of the present invention can be at least partially explained in association with a proper surface area and pore volume.

Although such obtained peculiar carrier is then treated with an alcohol, the solid catalyst component shows a fair good activity without such treatment.

As for the alcohol, there can be used aliphatic alcohols and aromatic alcohols such as methanol, ethanol, propanol, butanol, 2-ethyl hexanol, cyclohexanol, methylcyclohexanol, benzyl alcohol, methylbenzyl alcohol and glycol which have one or more number of hydroxyl group.

After chlorination and if required, alcohol treatment, the solid carrier is treated with a titanic halide to form a catalyst component.

According to the present invention, the carrier component is first treated with the titanic halide in the presence of an electron donor, and then if required, treated again at least one time with the titanic halide in the absence of the electron donor. If, according to the conventional art, the treatment with the electron donor should be conducted before the treatment with the titanic halide or the treatment with the electron donor should be conducted during or after the second treatment with the titanic halide, a catalyst component for polymerizing an - olefin having an extremely poor quality would be obtained.

The treatment with the titanic halide is carried out at the temperature in the range of -25 to +180°C. This treatment is preferably carried out several times separately. One preferred treatment will be described. First, the first time treatment is carried out in the titanic halide cooled. The temperature is 0° or less, and preferably -20°C or less. The second treatment with the titanic halide is carried out in a high temperature e.g., 70 to 150°C. In this treatment, the titanization is matured in a comparatively long time and preferably at least one hour.

The solid catalyst component (A) is then separated from the liquid phase and washed with a solvent of hydrocarbon group in order to remove impurity and derivative. The solid catalyst component (A) is dried under a slightly reduced pressure or in a nitrogen atmosphere and at a room temperature or slightly higher temperature, and can be homogenized in a mill. As for the electron donor which is a starting material for preparing the afore-mentioned solid catalyst component (A), there can be used organic compounds containing an oxygen atom, a nitrogen atom, a phosphorus atom or a sulfur atom.

Suitable examples of the electron donor include amines, amides, ketones, nitriles, phosphines, phosphorylamides, esters, ethers, thioethers, thioesters, acid anhydrides, acid halides, acid amides, aldehydes, and organic acids.

More specific examples thereof include organic acids such as aromatic carboxylic acids, e.g., benzoic acid, and p-oxybenzoic acid, acid anhydrides such as succinic anhydride, benzoic anhydride, and p-toluylic anhydride, ketones having 3 to 15 carbon atoms such as acetone, methyl ethyl ketone, methyl isobutyl ketone, acetophenone, benzophenone, and benzoquinone, aldehydes having 2 to 15 carbon atoms such as acetaldehyde, propinaldehyde, octaldehyde, benzaldehyde, tolualdehyde, and naphthaldehyde, esters having 2 to 18 carbon atoms such as monoesters, e.g., methyl formate, methyl acetate, ethyl acetate, vinyl acetate, propyl acetate, octyl acetate, cyclohexyl acetate, ethyl propionate, ethyl butyrate, ethyl valerate, methyl chloroacetate, ethyl dichloroacetate, methyl methaacrylate, ethyl crotonate, ethyl pivalate, dimethyl maleate, methyl benzoate, ethyl benzoate, propyl benzoate butyl benzoate, octyl benzoate, cyclohexyl benzoate, phenyl benzoate, benzyl benzoate, methyl toluylate, ethyl toluylate, amyl toluylate, ethyl ethylbenzoate, methyl anisate, ethyl anisate, ethyl ethoxybenzoate, ethyl p-butoxybenzoate, ethyl o-chlorobenzoate, and ethyl naphthoate, aromatic diesters e.g., dimethyl phthalate, diethyl phthalate, dipropyl phthalate, diisobutyl phthalate, methyl ethyl phthalate, methyl propyl phthalate, methyl isobutyl phthalate, ethyl propyl phthalate, ethyl isobutyl phthalate, propyl isobutyl phthalate, dimethyl terephthalate, diethyl terephthalate, dipropyl terephthalate, diisobutyl terephthalate, methyl ethyl terephthalate, methyl propyl terephthalate, methyl isobutyl terephthalate, ethyl propyl terephthalate, ethyl isobutyl terephthalate, dimethyl isophthalate, diethyl isophthalate, dipropyl isophthalate, diisobutyl isophthalate, methyl ethyl isophthalate, methyl propyl isophthalate, methyl isobutyl isophthalate, ethyl propyl isophthalate, ethyl isobutyl isophthalate, and propyl isobutyl isophthalate, $\gamma$-butyrolactone, $\delta$-valerolactone, coumarine, phthalide, and ethylene carbonate, acid halides having 2 to 15 carbon atoms such as acetyl chloride, benzyl chloride, toluyl chloride, and anisyl chloride, ethers having 2 to 20 carbon atoms such as dimethyl ether diethyl ether, diisopropyl ether, di-n-butyl ether, diamyl ether, tetrahydrofuran, anisol, diphenyl ether, and ethylene glycol butyl ether, acid amides such as acetamide, benzoic acid amide, and toluylic acid amide, amines such as tributylamine, N,N'-dimethylpiperazine, tribenzylamine, aniline, pyridine, picoline, and tetramethylethlenediamine, and nitriles such as acetonitrile, benzonitrile, and tolunitrile.

Among them, esters, ethers, ketones, and acid anhydrides are preferred. More preferred electron donors include alkyl esters of an aromatic carboxylic acid, e.g., alkyl (1 to 4 arbon atoms) ester of an aromatic carboxylic acid such as benzoic acid, p-methoxybenzoic acid, p-ethoxybenzoic acid, and toluylic acid, diester of an aromatic carboxylic acid such as diisobutyl phthalate, aromatic ketones such as benzoquinone, aromatic carboxylic acid anhydrides such as benzoic anhydride, ethers such as ethylene glycol butyl ether.

Specific examples of the afore-mentioned titanic halide which is one of the starting materials of the solid catalyst component include titanium tetrahalides such as $TiCl_4$, $TiBr_4$, and $TiI_4$, alkoxytitanium trihalides such as $Ti(OCH_3)Cl_3$, $Ti(OC_2H_5)Cl_3$, $(n\text{-}C_4H_9O)TiCl_3$, and $Ti(OC_2H_5)Br_3$, alkoxytitanium dihalides such as $Ti(OCH_3)_2Cl_2$, $Ti(OC_2H_5)Cl_2$, $(n\text{-}C_4H_9O)_2Ti_2Cl_2$, and $Ti(OC_3H_7)_2Cl_2$, trialkoxytitanium monohalides such as $Ti(OCH_3)_3Cl$, $Ti(OC_2H_5)_3Cl$, $(n\text{-}C_4H_9O)_3TiCl$, and $Ti(OCH_3)_3Br$.

These be can used singly or as mixtures.

Of these, a titanic halide containing many halogen atoms is preferred, and the titatium tetra halide is particularly preferred.

In time of preparation of the solid catalyst component, there can be used, as the afore-mentioned solvent, those organic solvents which are inert to the magnesium dialkoxide, the electron donor and the titanic halide, for example, aliphatic hydrocarbons such as hexane, and heptane, aromatic hydrocarbons such as benzene, and toluene, or haloganated hydrocarbons such as mono- and polyhalogenated derivatives of saturated or unsaturated aliphatic hydrocarbons having 1 to 12 carbon atoms, saturated or unsaturated alicyclic hydrocarbons and aromatic hydrocarbons.

At any rate, in such prepared solid catalyst component, halogen/titanium (mole ratio) is 3 to 200 and preferably 4 to 100, and magnesium/titanium (mole ratio) is 1 to 90 and preferably 5 to 70.

## 2. ORGANIC ALUMINIUM (B)

As for the organic aluminium compound, there is no particular limitation and can be widely used e.g. a compound represented by formula

$AlR^6_vX_{3-v}$
$Al_2R^6X_3$

wherein $R^6$ represents an alkyl group having 1 to 10 carbon atoms, a cycloalkyl group or an aryl group, v

represents a real number of 1 to 3 and X represents a halogen atom such as a chlorine atom, and a bromine atom.

Specifically, preferred examples of the aluminium compound represented by the above formula include trialkylaluminiums such as trimethylaluminium, triethyaluminium, triisopropylaluminium, triisobutylaluminium, and trioctylaluminium, dialkylaluminium monohalides such as diethlaluminium monochloride, diisopropylaluminium monochloride, diisobutylaluminium monochloride, and dioctylaluminium monochloride, alkylaluminium sesquihalides such as ethylaluminium sesquihalide. Of these, trialkylaluminium is preferable and triisobutylaluminium is particularly preferred.

## 3. ELECTRON DONATING COMPOUND (C)

The afore-mentioned electron donating compound (C) according to the present invention is a heterocyclic compound represented by

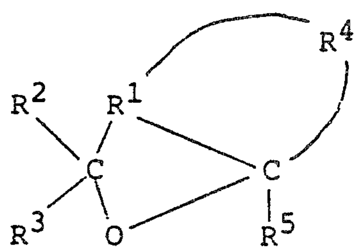

(2)

wherein $R^1$ and $R^4$ each represent a hydrocarbon group and preferably a substituted or unsubstituted, saturated or unsaturated hydrocarbon group having 2 to 5 carbon atoms, and $R^2$, $R^3$ and $R^5$ each represent a hydrogen atom or a hydrocarbon group and preferably a hydrogen atom or a substituted or unsubstituted, saturated or unsaturated hydrocarbon group having 2 to 5 carbon atoms.

If there should be used electron donating compounds (C) other than the above-mentioned heterocyclic compound such as silane compounds and aromatic carboxylic acid esters, the catalytic activity is low and the stereoregularity of the produced polymer is low, too.

Specific examples of the heterocylic compound include 1,4-cineole, 1,8-cineole, m-cineole, pinol, benzofuran, 2,3-dihydro benzofran (coumaran), 2H-chromene, 4H-chromene, chroman, isochroman, dibenzofran, and xanthene.

These various kinds of heterocyclic compounds can be used singly or as mixtures of two kinds or more.

Of the afore-mentioned various kinds of heterocyclic compounds, the 1,8-cineole is preferred.

## 4. POLYMERIZATION

According to the method of the present invention, the butene-1 or the butene-1 and α-olefins other than the butene-1 are polymerized in the presence of the catalyst including the solid catalyst component (A), the organic alminium compound (B) and the specific heterocyclic compound (C) and under the condition of vapor phase polymerization.

As compositions of the catalyst, the afore-mentioned organic aluminium compound (B) is 0.1 to 1000 moles per mole of the titanic halide contained in the solid catalyst component (A) and preferably 1 to 500 moles, while the aforementioned heterocyclic compound (C) is 0.1 to 500 moles per mole of the titanium atoms in the titanic halide contained in the solid catalyst component (A) and preferably 0.5 to 200 moles.

As for the condition of vapor phase polyerization, the polymerization temperature is 45 to 70 °C and preferably 50 to 65 °C.

When the polymerization temperature is lower than 45 °C, the partial pressure of the butene-1 cannot be made very high due to the necessity to prevent liquefaction. Accordingly, the rate of polymerization cannot be made sufficiently large and it becomes difficult to remove the polymerization heat in industrial scale. On the contrary, when the polymerization temperature is higher than 70 °C, the operation of polymerization becomes difficult since polymer particles produced are easily coagulated and attached to the inside wall of a reactor. In addition, the catalytic activity is lowered to prevent a smooth operation of

polymerization.

Although the partial pressure of the butene-1 is different depending on the polymerization temperature, it may be in the range where the liquefaction is not taken place in substantial amount. Usually, it is approximately 1 to 15 bar ($Kg/cm^2$).

Further, a molecular weight regulator such as a hydrogen may be coexisted for the purpose of regulating the molecular weight. Furthermore, there may be coexisted an inert gas having a lower boiling point than the butene-1 such as, for example, nitrogen, methane, ethane, and propane. Due to coexistence of these inert gases, coagulating tendency of the polymer is much more reduced. In addition, removal of the polymerization heat becomes easy. An effective coexisting amount of the inert gases is 0.2 moles or more per mole of the butene-1.

The vapor phase polymerization can be carried out using a fluidized bed and an agitating fluidized bed. Otherwise, it can be carried out by flowing a gas component into a tube-shaped reactor.

According to the process of the present invention, there can be produced a homopolymer of the butene-1 or a random or a so-called block copolymer of the butene-1 and the α-olefin other than the butene-1.

When production of the homopolymer is intended, the butene-1 alone is supplied to a polymerization reactor and polymerization reaction is carried out in a conventional manner.

On the other hand, when it is intended to produce the random copolymer, the butene-1 and the α-olefin other than the butene-1 are supplied to a reaction reactor such that the content of butene-1 as a monomer unit in the copolymer is from 60 to 99.5 mole % and preferably 70 to 98 mole % and then copolymerization reaction is carried out.

In order to produce the so-called block copolymer, after conducting a polymerization treatment in the first stage where the α-olefin e.g., butene-1 or propylene is singlarly polymerized, the butene-1 and the α-olefin other than the butene-1 are copolymerized in the presence of the homopolymer of the α-olefin obtained in the first stage.

As for the α-olefin other than the butene-1, there can be used straight chain monoolefins such as propylene, ethylene, hexene-1, and octene-1, and branched chain monoolefins such as 4-methyl-pentene-1, and dienes such as butadiene.

In order to obtain a butene-1 polymer having preferable properties, it is advantageous to use the propylene as the α-olefin other than the butene-1.

When the vapor phase polymerization method is employed, a step of recovering a solvent used in polymerization can be eliminated and as a result a step of drying the resulting polymer can be simplified to a great extent.

Treatment after polymerization in the method of the present invention is carried out in a conventional manner. That is, a polymer powder guided out of the reactor after the vapor phase polymerization may be passed therethrough with a nitrogen gas stream in order to remove an α-olefin, etc., contained therein. Also, if requested, it may be pelletized by an extruding machine. At that time, a small amount of water, or alcohol may be applied in order to completely deactivate a catalyst.

A butene-1 polymer obtained according to the present invention as described in the foregoing, usually has an intrinsic viscosity number [η] of from 1.0 to 7,0 dl/g (135 °C,decalin solution), I.I. (undisolving portion after extracted for 6 hours using Soxhlet extractor in boiling diethylether) of 95% or more and bulk density of 0.20 g/cc or more in many cases. A content of catalyst residue remained in a polymer obtained is further decreased.

As a result, the butene-1 polymer obtained according to the method of the present invention is used as a preferable material for various pipes.

The present invention has the following benefits or advantages.

(1) Since the catalyst used has a high activity, an amount of catalyst residue remained in the resulting polymer can be reduced and as a result the step of removing a catalyst residue from the polymer of butene-1 obtained can be eliminated. In addition, since a harmful residue is little, the problem of corrosion of the molding machine can be eliminated.

(2) Since a polymer power having a large bulk density can be obtained, it is convenient for a powder transportation.

(3) Since the butene-1 polymer has [η] of from 0.1 to 7.0 dl/g and excellent in stereoregularity property (I.I.) and anti-creep property, it can be used for molding articles such as pipes which have an excellent appearance.

The method of the present invention will be described in greater detail with reference to the non-limitative examples and comparative examples.

## Claims

1. A process for producing a butene-1 polymer by the homopolymerization of butene-1 or the copolymerzation of butene-1 and an $\alpha$-olefin other than said butene-1 in the vapor phase at a temperature of from 45 to 70 °C in the presence of a catalyst **characterized in that** said catalyst comprises:
   **A.** a solid catalyst component, which is a non-layer solid catalyst component, obtained by chlorinating at least one kind of organic magnesium compound of the formula

   MgR'R"

   wherein R' and R", which may be the same or different, each represent an alkyl group having 1 to 20 carbon atoms, using at least one kind of chlorinating agent, to produce a carrier, contacting said carrier first with a titanic halide in the presence of an electron donor at a temperature of -25 to + 180 °C, and then if required, again at least one time with the titanic halide in the absence of the electron donor;
   **B.** an organic aluminum compound; and
   **C.** an electron donating compound which is a heterocyclic compound represented by the formula

   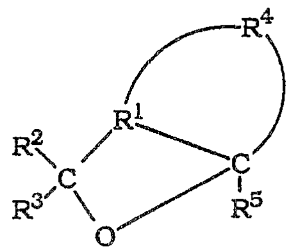

   wherein $R^1$ and $R^4$ each represent a hydrocarbon group, and $R^2$, $R^3$ and $R^5$ each represent a hydrogen atom or a hydrocarbon group.

2. A process for producing a butene-1 polymer as claimed in claim 1, wherein said organic magnesium compound is butyloctyl magnesium and butyl ethyl magnesium.

3. A process for producing a butene-1 as claimed in claim 1, wherein said chlorinating agent is butyl chloride.

4. A process for producing a butene-1 polymer as claimed in claim 1, wherein said electron donor is aromatic diester.

5. A process for producing a butene-1 polymer as claimed in claim 1, wherein said electron donor is diisobutyl phthalate.

6. A process for producing a butene-1 polymer as claimed in claim 1, wherein said titanic halide is titanium tetrachloride.

7. A process for producing a butene-1 polymer as claimed in claim 1, wherein said electron donating compound is 1,8-cineole.

## Revendications

1. Procédé de préparation d'un polymère de butène-1, par homopolymérisation du butène-1, ou copolymérisation du butène-1 et d'une $\alpha$-oléfine autre que le butène-1, en phase vapeur à une température de 45 à 70 °C en présence d'un catalyseur, caractérisé en ce que ce catalyseur comprend :
   A. un composant catalytique solide qui est un composant catalytique solide ne comportant pas plusieurs couches, obtenu par chloration d'au moins un type de composé organique dérivé du magnésium de formule:

MgR'R" (1)

dans laquelle R' et R" qui peuvent être identiques ou différents, représentent chacun un groupe alkyle comportant de 1 à 20 atomes de carbone, avec au moins un type d'agent de chloration, pour préparer un support que l'on met d'abord en contact avec un halogénure titanique en présence d'un donneur d'électrons à une température de -25 à +180 °C, et si cela est nécessaire, ensuite à nouveau au moins une fois avec l'halogénure titanique en l'absence du donneur d'électrons ;
B. un composé organique dérivé de l'aluminium ; et
C. un composé donneur d'électrons consistant en un composé hétérocyclique de formule :

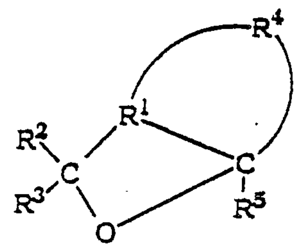

dans laquelle $R^1$ et $R^4$ représentent chacun un groupe hydrocarboné et $R^2$, $R^3$ et $R^5$ représentent chacun un atome d'hydrogène ou un groupe hydrocarboné.

2. Procédé de préparation d'un polymère de butène-1 selon la revendication 1, dans lequel le composé **organomagnésien** est choisi parmi le butyloctyl magnésium et le butyl éthyl magnésium.

3. Procédé de préparation d'un polymère de butene-1 selon la revendication 1, dans lequel l'agent de chloration est le chlorure de butyle.

4. Procédé de préparation d'un polymère de butène-1 selon la revendication 1, dans lequel le donneur d'électrons est un diester aromatique.

5. Procédé de préparation d'un polymère de butène-1 selon la revendication 1, dans lequel le donneur d'électrons est le phtalate de diisobutyle.

6. Procédé de préparation d'un polymère de butène-1 selon la revendication 1, dans lequel l'halogénure titanique est le tétrachlorure de titane.

7. Procédé de préparation d'un polymère de butène-1 selon la revendication 1, dans lequel le composé donneur d'électrons est le 1,8-cinéol.

## Ansprüche

1. Verfahren zur Herstellung eines Buten-1-Polymeren durch Homopolymerisation von Buten-1 oder durch Copolymerisation von Buten-1 und einem von Buten-1 verschiedenen α-Olefin, in der Dampfphase bei einer Temperatur von 45 bis 70 °c, in Gegenwart eines Katalysators, **dadurch gekennzeichnet**, daß der Katalysator umfaßt:
A. eine feste Katalysatorkomponente, die eine nichtgeschichtete feste Katalysatorkomponente ist, erhalten durch Chlorieren wenigstens einer Art einer organischen Magnesiumverbindung der Formel

MgR'R"

worin R' und R", die gleich oder verschieden sein können, Jeweils eine Alkylgruppe mit 1 bis 20 Kohlenstoffatomen bedeuten, unter Verwendung von wenigstens einer Art eines Chlorierungsmittels

zur Herstellung eines Trägers, Inkontaktbringen des Trägers zuerst mit einem Titanhalogenid in Gegenwart eines Elektronendonors bei einer Temperatur von -25 bis + 180 °C und anschließend, falls erforderlich, erneut wenigstens einmal Inkontaktbringen mit dem Titanhalogenid in Abwesenheit des Elektronendonors;

B. eine organische Aluminiumverbindung; und

C. eine Elektronendonorverbindung, die eine heterocyclische Verbindung der Formel

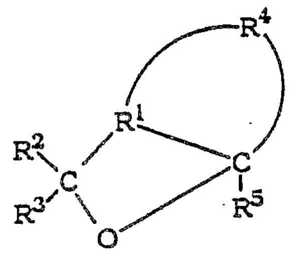

darstellt, worin $R^1$ und $R^4$ Jeweils eine Kohlenwasserstoffgruppe und $R^2$, $R^3$ und $R^5$ Jeweils ein Wasserstoffatom oder eine Kohlenwasserstoffgruppe bedeuten.

**2.** Verfahren zur Herstellung eines Buten-1-Polymeren nach Anspruch 1, worin die organische Magnesiumverbindung Butyloctylmagnesium und Butylethylmagnesium ist.

**3.** Verfahren zur Herstellung eines Buten-1 nach Anspruch 1, worin das Chlorierungsmittel Butylchlorid ist.

**4.** Verfahren zur Herstellung eines Buten-1-Polymeren nach Anspruch 1, worin der Elektronendonor ein aromatischer Diester ist.

**5.** Verfahren zur Herstellung eines Buten-1-Polymeren nach Anspruch 1, worin der Elektronendonor Diisobutylphthalat ist.

**6.** Verfahren zur Herstellung eines Buten-1-Polymeren nach Anspruch 1, worin das Titanhalogenid Titantetrachlorid ist.

**7.** Verfahren zur Herstellung eines Buten-1-Polymeren nach Anspruch 1, worin die Elektronendonorverbindung 1,8-Cineol ist.

FIG. 1

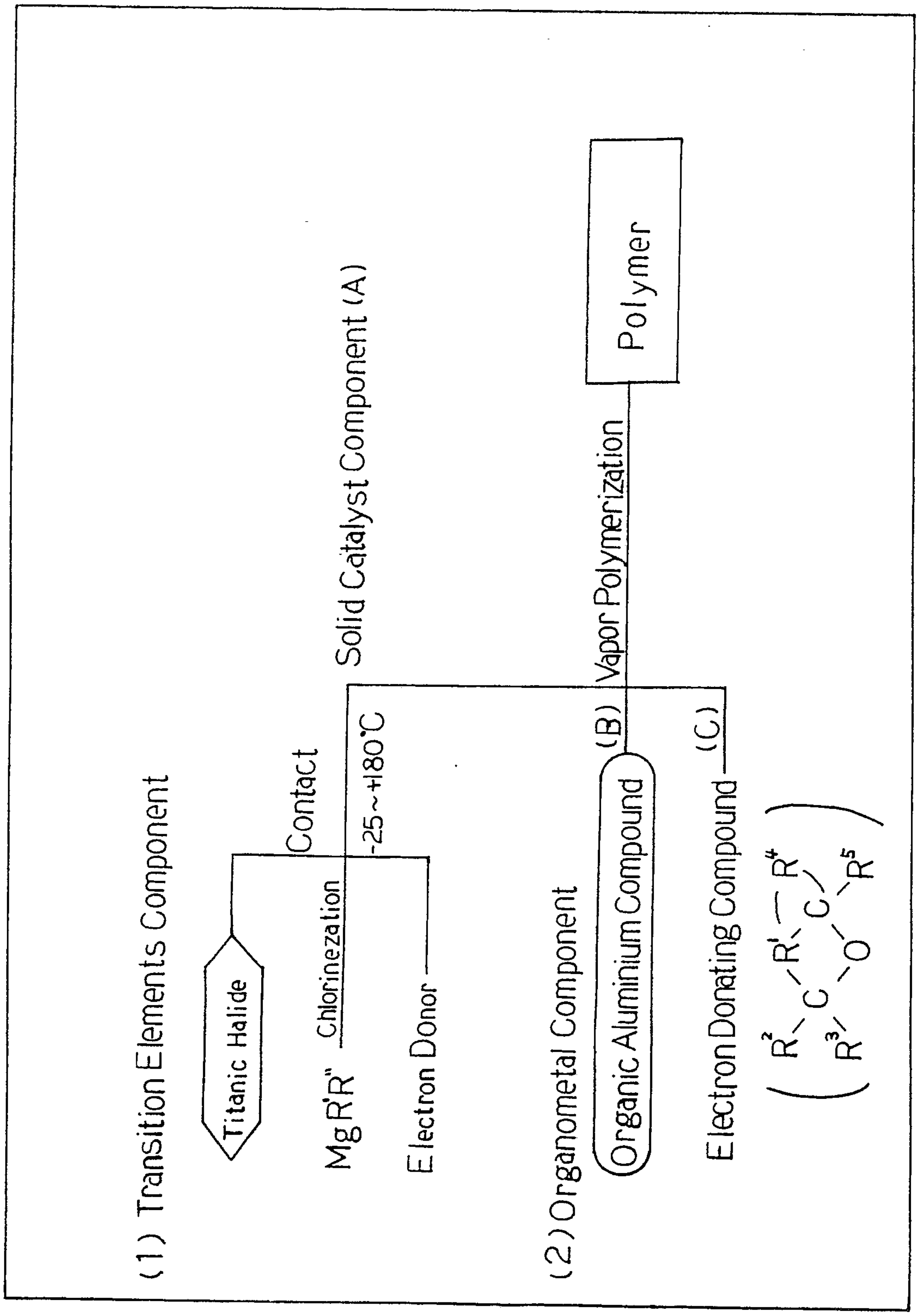
(1) Transition Elements Component
Titanic Halide
Contact
$MgR'R''$
Chlorinezation
-25~+180°C
Electron Donor
Solid Catalyst Component (A)
(2) Organometal Component
Organic Aluminium Compound
(B)
Vapor Polymerization
Polymer
Electron Donating Compound
(C)

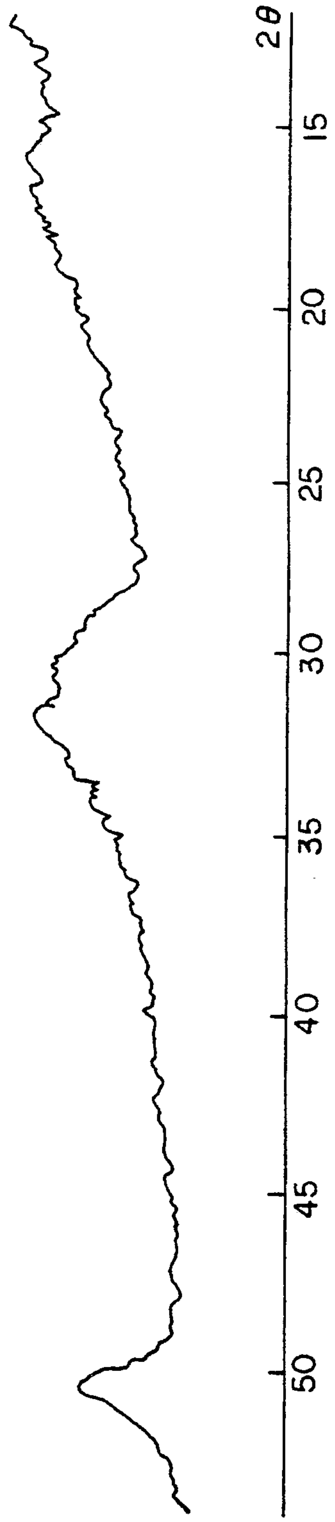


FIG. 2

FIG. 3